# EUROPEAN PATENT APPLICATION

(11) **EP 2 921 948 A1**
(43) Date of publication of application: **23.09.2015**
(21) Application number: 15159497.5
(22) Date of filing: 17.03.2015
(51) Int. Cl.: G06F 3/0488, H04N 21/422, G06F 3/0354

(54) **DISPLAY APPARATUS FOR INTERWORKING WITH A CONTROL APPARATUS INCLUDING A TOUCHPAD**

(30) Priority: 20.03.2014 KR 20140032788
(71) Applicant: Samsung Electronics Co., Ltd., Suwon-si, Gyeonggi-do (KR)
(72) Inventor: Kim, Han-soo, Seoul (KR); Yoon, Yeo-ri, Chungcheongbuk-do (KR); Lee, Dong-heon, Seoul (KR)
(74) Representative: Walaski, Jan Filip

(57) **Abstract**

A method of controlling a display apparatus for interworking with a control apparatus including a touchpad including displaying a note region and at least one icon, operating in a first mode for displaying an image corresponding to a user touch input on the note region in response to the user touch input in a predetermined region of the touchpad, and operating in a second mode for displaying a highlight on one of the at least one icon and manipulating the at least one icon in response to a user touch input to deviate from the predetermined region of the touchpad.

## Description

The present invention relates to a display apparatus and a method of controlling the same, and more particularly, to a display apparatus that is freely manipulated between a relative input method for movement to all on screen displays, (OSDs) and an absolute input type handwriting when a specific condition is satisfied via four-direction inputs of a touchpad and a method of controlling the display apparatus.

Recently, as a function applied to display apparatuses has been diversified, various control apparatuses for controlling the display apparatus have been developed. For example, as a control apparatus for controlling a display apparatus, a pointing device and a motion recognition apparatus for recognition of user motion, a voice recognition apparatus for recognition of user voice, etc. have been developed.

In particular, a conventional remote controller also includes a touchpad so as to control various functions of a display apparatus. A conventional control apparatus provides an absolute input method of handwriting recognition function using a touchpad or provides a relative input method of moving function of a highlight or a cursor. That is, the conventional control apparatus provides only one input method of the absolute input method and the relative input method. Accordingly, there is a limit in controlling various functions of a display apparatus.

In addition, even if both the two input methods are provided, it is inconvenient to perform separate manipulation of a user for mode conversion of the two input methods.

Exemplary embodiments overcome the above disadvantages and other disadvantages not described above. Also, the exemplary embodiments is not required to overcome the disadvantages described above, and an exemplary embodiment may not overcome any of the problems described above.

An exemplary embodiment provides a display apparatus and a method of controlling the same, for free conversion between an absolute input type handwriting recognition mode and relative input type highlight movement.

According to an aspect of the exemplary embodiment, a method of controlling a display apparatus interworking with a control apparatus including a touchpad includes displaying a note region and at least one icon, operating in a first mode for displaying an image corresponding to a user touch input on the note region in response to the user touch input being input in a predetermined region of the touchpad, and operating in a second mode for displaying a highlight on one of the at least one icon and manipulating the at least one icon in response to a user touch input being input to deviate from the predetermined region of the touchpad.

The predetermined region may be spaced away from an edge of the touchpad by as much as a first distance or more.

The method may further include displaying visual feedback for guidance of conversion to a second mode from a first mode on a surrounding region of the note region in response to the user touch input between the first distance and a second distance greater than the first distance from the edge of the touchpad.

The visual feedback may be displayed outside an edge corresponding to a direction in which the user touch is input, among upper, lower, right, and left edges of the note region.

The displaying of the visual feedback may include increasing a size of the visual feedback in response to a user touch input close to the first distance from the second distance.

The operating in the first mode may include maintaining the first mode when the user touch input deviates from the predetermined region of the touchpad and then continuously and seamlessly enters the predetermined region of the touchpad.

The operating in the first mode may include maintaining the first mode when a user touch is input in the predetermined region of the touchpad, continuously deviates from the predetermined region, and then is terminated within predetermined threshold time.

According to another exemplary embodiment, a display apparatus interworking with a control apparatus including a touchpad includes a display configured to display a note region and at least one icon, and a controller configured to operate in a first mode for displaying an image corresponding to a user touch input on the note region in response to the user touch input being input in a predetermined region of the touchpad and to operate in a second mode for displaying a highlight on one of the at least one icon and manipulating the at least one icon in response to a user touch input deviating from the predetermined region of the touchpad.

The predetermined region may be spaced away from an edge of the touchpad by as much as a first distance or more.

The controller may display visual feedback for guidance of conversion to a second mode from a first mode on a surrounding region of the note region in response to the user touch input between the first distance and a second distance greater than the first distance from the edge of the touchpad.

The visual feedback may be displayed outside an edge corresponding to a direction in which the user touch is input, among upper, lower, right, and left edges of the note region.

The visual feedback may be increased in size in response to a user touch input close to the first distance from the second distance.

The controller may maintain the first mode when the user touch input deviates from the predetermined region of the touchpad and then continuously and seamlessly enters the predetermined region of the touchpad.

The controller may maintain the first mode when a user touch is input in the predetermined region of the touchpad, continuously deviates from the predetermined region, and then is terminated within predetermined threshold time.

According to the various aforementioned exemplary embodiments, a user may freely convert an absolute input mode and a relative input mode of a control apparatus to more conveniently execute various functions of a display apparatus.

Additional and/or other aspects of exemplary embodiments will be set forth in part in the description which follows and, in part, will be obvious from the description, or may be learned by practice of the exemplary embodiment.

The above and/or other aspects of the exemplary embodiments will be more apparent by describing certain exemplary embodiments with reference to the accompanying drawings, in which:
FIG. 1 is a schematic block diagram illustrating a structure of a display apparatus according to an exemplary embodiment;
FIG. 2 is a detailed block diagram illustrating a structure of a display apparatus according to an exemplary embodiment;
FIG. 3A and FIG 3B are diagrams for explanation of an operation of a display apparatus that interworks with a control apparatus including a touchpad, according to an exemplary embodiment;
FIG. 4 is a diagram for explanation of a predetermined region of a touchpad according to an exemplary embodiment;
FIG. 5 is a diagram for explanation of four-direction input of a touchpad according to an exemplary embodiment;
FIGS. 6A to 8 are diagrams for explanation of an operation of a display apparatus that interworks with a control apparatus including a touchpad, according to an exemplary embodiment;
FIG. 9 is a flowchart for explanation of an operation of a display apparatus that interworks with a control apparatus including a touchpad according to an exemplary embodiment;
FIGS. 10A to 10C are diagrams for explanation of an operation of a display apparatus that interworks with a control apparatus including a touchpad according to another embodiment;
FIGS. 11A to 11C are diagrams for explanation a method of displaying an input text using a keyboard type note region, according to another exemplary embodiment;
FIGS. 12A to 12C are diagrams for explanation a method of displaying an input text using a handwriting recognition type note region, according to another exemplary embodiment; and
FIG. 13 is a flowchart of a method of displaying a text of a display apparatus according to an exemplary embodiment.

Certain exemplary embodiments will now be described in greater detail with reference to the accompanying drawings.

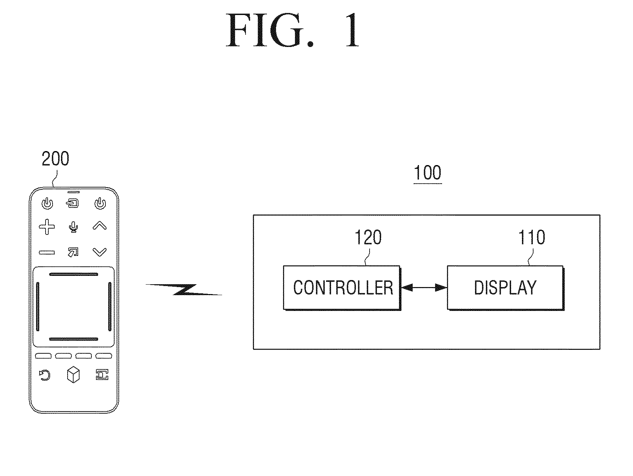

FIG. 1 is a schematic block diagram illustrating a structure of a display apparatus 100 and a control apparatus 200 including a touchpad according to an exemplary embodiment. As illustrated in FIG. 1, the display apparatus 100 includes a display 110 and a controller 120.

The display apparatus 100 may be a smart television (TV) which is merely an exemplary embodiment and thus may be embodied as a display apparatus such as a desk top, a tablet, a smart phone, etc. In this case, the display apparatus 100 may interwork with the control apparatus 200 including the touchpad to display an image corresponding to a user touch input on a note region of the display 110.

The display 110 displays the note region and at least one icon. According to an exemplary embodiment, the display 110 may display the note region and at least one icon. In this case, in response to a user touch input being input within a predetermined region of the touchpad, the display 110 may display an image corresponding to a user touch input trajectory on the note region.

In addition, in response to a user touch input being input to deviate from the predetermined region of the touchpad, the display 110 may display a highlight on one of the at least one icon. In this case, in response to a user touch input between a first distance and a second distance greater than the first distance from an edge of the touchpad, the display 110 may display visual feedback for guidance of conversion to a second mode from a first mode on a surrounding region of the note region.

The controller 120 controls an overall operation of the display apparatus 100.

In particular, according to an exemplary embodiment, when an operation is performed in the first mode for displaying an image corresponding to a user touch input trajectory input through the control apparatus 200 including the touchpad or a user touch input is input to deviate from a predetermined region of the touchpad, the controller 120 may control the display apparatus 100 to display a highlight on one of at least one icon to manipulate at least one icon.

In this case, the predetermined region may be set to a region spaced away from an edge of the touchpad by as much as the first distance or more and the second distance may be set to be greater than the first distance. In this case, in response to a user touch input between the first distance and the second distance, the controller 120 may control the display 110 to display visual feedback for guidance of conversion to the second mode from the first mode on a surrounding region of the note region.

According to an exemplary embodiment, visual feedback may be displayed outside an edge corresponding to a trajectory direction of a user touch region among upper, lower, right, and left edges. In this case, in response to a user touch input close to the first distance from the second distance, the controller 120 may increase the size of the visual feedback.

In addition, when a user touch input deviates from a predetermined region of the touchpad and then continuously and seamlessly enters the predetermined region of the touchpad, the controller 120 may maintain the first mode.

When a user touch is input in the predetermined region of the touchpad, and continuously deviates from the predetermined region, and then is terminated within predetermined threshold time, the controller 120 may maintain the first mode.

The control apparatus 200 may include the touchpad and control the display apparatus 100. According to an exemplary embodiment, the control apparatus 200 may be a control apparatus for control of the display apparatus 100, for example, a remote controller, a pointing device, etc.

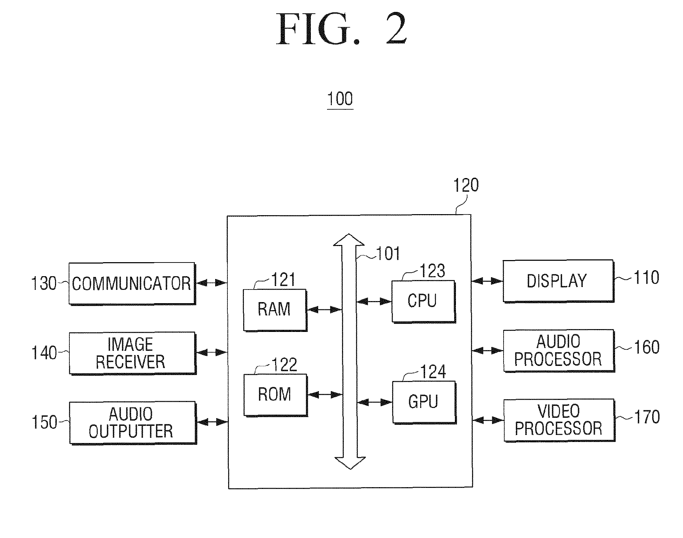

Hereinafter, the display apparatus 100 will be described with regard to various exemplary embodiments with reference to FIGS. 2 to 8.

FIG. 2 is a detailed block diagram illustrating the structure of the display apparatus 100 according to an exemplary embodiment. As illustrated in FIG. 2, the display apparatus 100 includes the display 110, the controller 120, a communicator 130, an image receiver 140, an audio outputter 150, an audio processor 160, and a video processor 170.

FIG. 2 illustrates overall various components when the display apparatus 100 is, for example, an apparatus having various functions such as a communication function, a broadcast receiving function, a video reproducing function, a display function, etc. Accordingly, in some embodiments, some of the components illustrated in FIG. 2 may be omitted or modified and other components may be further added.

The display 110 display image data and various user interfaces (UIs) according to control of the controller 120. In particular, the display 110 may display a note region and at least one icon.

The communicator 130 is a component that communicates with various types of external devices or external servers according to various types of communication schemes. The communicator 130 may include various communication chips such as WiFi chip, a Bluetooth chip, a near field communication (NFC) chip, a wireless communication chip, etc. In this case, the WiFi chip, the Bluetooth chip, and the NFC chip may each perform communication via a WiFi scheme, a Bluetooth scheme, and an NFC scheme. Among these chips, the NFC chip refers to a chip that operates in an NFC manner using a band of 13.56 MHz among various radio frequency identification (RF-ID) frequency bands such as 135 kHz, 13.56 MHz, 433 MHz, 860 to 960 MHz, 2.45 GHz, etc. When the WiFi chip or the Bluetooth chip is used, various pieces of connection information such as subsystem identification (SSID), a session key, etc. may be transmitted and received and then communication linkage may be achieved using the various pieces of connection information to transmit and receive various pieces of information. The wireless communication chip refers to a chip that performs communication according to various communication standards such as IEEE, ZigBee, 3rd generation (3G), 3rd generation partnership project (3GPP), long term evolution (LTE), etc.

According to an embodiment of the present invention, in response to a user touch input being input in a predetermined region of the touchpad of the control apparatus 200, the communicator 130 may receive user input information from the control apparatus 200.

The image receiver 140 receives content via various external sources. In detail, the image receiver 140 may receive broadcast content from an external broadcast station, receive image content from an external apparatus (e.g., a digital versatile disc (DVD) apparatus), and receive streaming content from an external server. Various icons associated with the received content may be displayed via the display 110.

The audio outputter 150 outputs audio data of the image content. The audio outputter 150 is a component that outputs various notice sounds or voice message as well as various audio data processed by the audio processor 160.

The video processor 170 processes the image content received from the image receiver 140 in the form of displayable data. The video processor 170 may perform various image processing processes such as decoding, scaling, noise filtering, frame rate conversion, resolution conversion, etc. on image data.

The audio processor 160 is a component for processing audio data. The audio processor 160 may perform various processing processes such as decoding, amplification, noise filtering, etc. on the audio data. The audio data processed by the audio processor 160 may be output to the audio outputter 150.

The controller 120 instructs a control apparatus including a touchpad to control an overall operation of the display apparatus 100.

As illustrated in FIG. 2, the controller 120 includes a random access memory (RAM) 121, a read only memory (ROM) 122, a main central processing unit (CPU) 123, a graphic processor 124, and a bus 101. In this case, the RAM 121, the ROM 122, the main CPU 123, the graphic processor 124, etc. may be connected to each other via the bus 101.

The RAM 121 stores a command set, etc. for system booting. When a power-on command of the display apparatus 100 is input to supply power to the main CPU 123, the main CPU 123 copies an operating system (O/S) stored in a storage (not shown) and executes the O/S to boot a system according to a command stored in the ROM 122.

The graphic processor 124 generates an image containing various objects such as an icon, an image, a text, content, etc. using a calculator (not shown) and a renderer (not shown).

The main CPU 123 accesses a storage (not shown) and performs booting using the O/S stored in the storage. In addition, the main CPU 123 performs various operations using various programs, content, data, icons associated therewith, etc., stored in the storage.

In particular, the controller 120 may interwork with the control apparatus 200 including the touchpad to control the display apparatus 100.

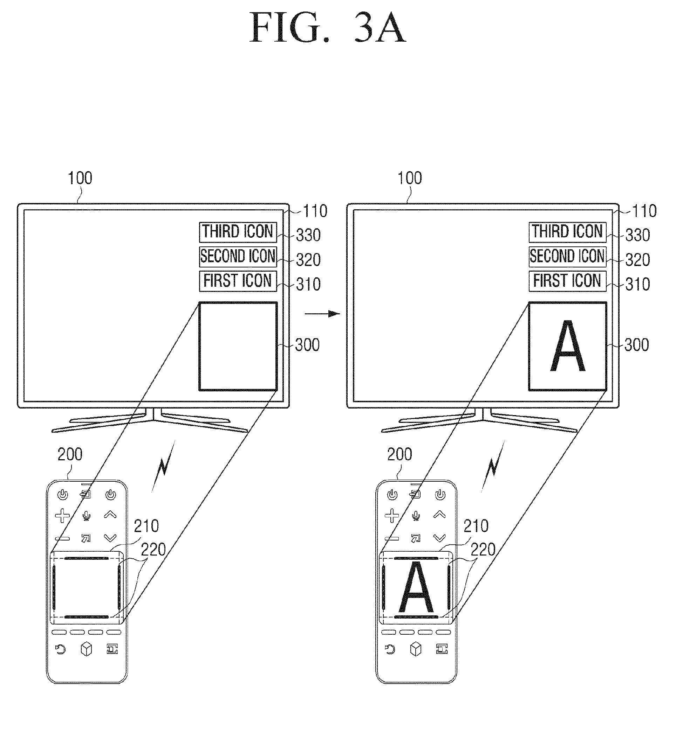

In detail, as illustrated in FIG. 3A, the controller 120 may control the display 110 to display a note region 300, and a first icon 310 to a third icon 330.

In response to a user touch input being input in a predetermined region (an internal region of a dotted line 220) of a touchpad 210, the controller 120 may operate in a first mode for displaying an image corresponding to a user touch input trajectory on the note region 300. For example, as illustrated in FIG. 3A, in a response to a text 'A' input via the touchpad 210, the controller 120 may control the display 110 to display the text 'A' corresponding to a user touch input trajectory on the note region 300.

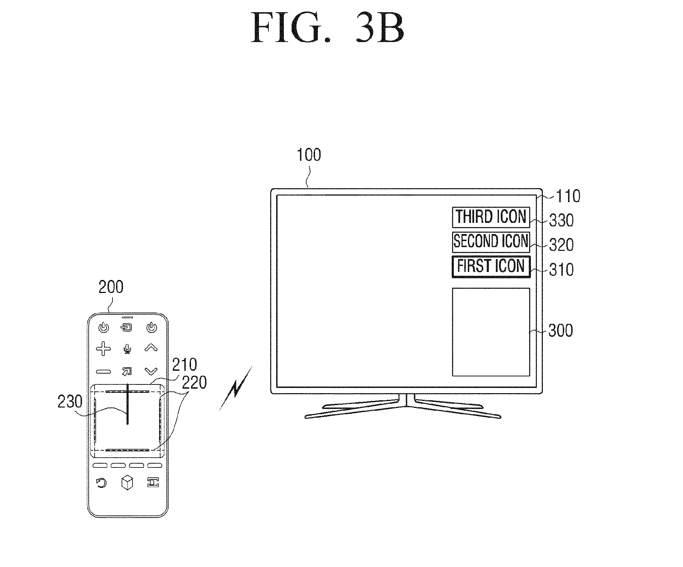

In response to a user touch input being input to deviate from the predetermined region (the internal region of the dotted line 220) of the touchpad 210, the controller 120 may control the display apparatus 100 to display a highlight on one of at least one icon and to operate in the second mode for manipulation of at least one icon. For example, as illustrated in FIG. 3B, in response to a user touch input deviating from the predetermined region (the internal region of the dotted line 220) of the touchpad 210, the controller 120 may control the display apparatus 100 to move a highlight to the first icon 310 present at a position corresponding to a user touch input trajectory among the first icon 310 to the third icon 330 and to operate in the second mode for manipulation of the highlighted first icon 310.

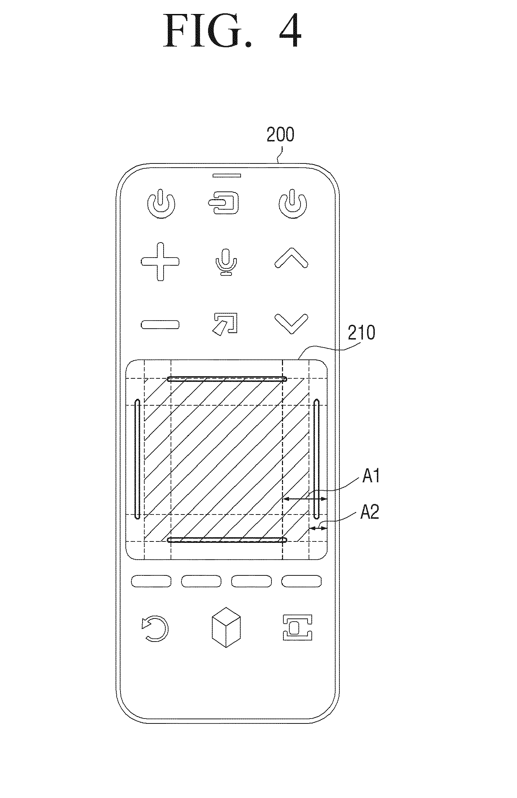

According to an exemplary embodiment, a predetermined region may be set to a region spaced away from an edge of the touchpad by as much as the first distance or more. For example, as illustrated in FIG. 4, the first distance may be A1 of FIG. 4 and the second distance may be A2 of FIG. 4. In this case, A1 may be a distance from the edge of the touchpad 210 by as much as 7% and A2 may be a distance from the edge of the touchpad 210 by as much as 15%. A ratio of a distance spaced away from the edge of the touchpad 210 is not limited to the aforementioned specific embodiment and may be modified in various ways.

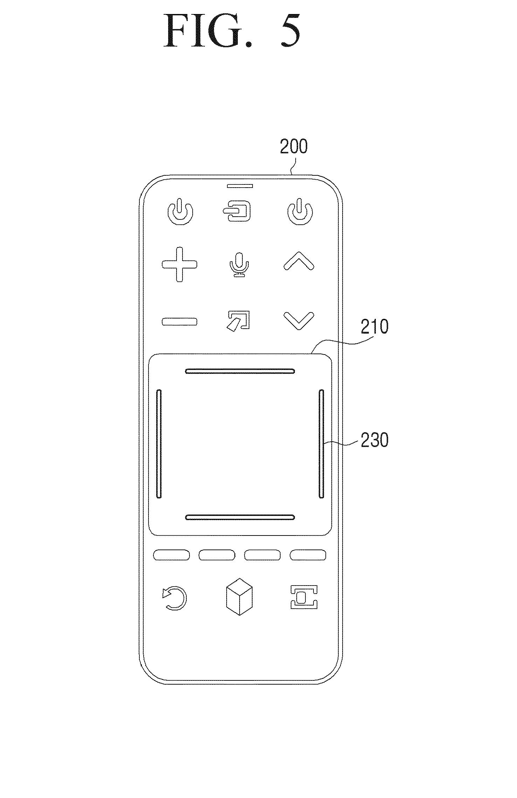

According to an exemplary embodiment, as illustrated in FIG. 5, the control apparatus 200 may include a guide line 230 at the first distance on the touchpad 210. When the guide line 230 is included in the touchpad 210, a user may clearly distinguish an internal region and an external region of a predetermined region (an internal region of the guide line 230) of the touchpad 210 and may input a touch input. According to another exemplary embodiment, the guide line 230 may protrude in the form of protrusion to form a four-direction input key 230. In this case, when a user touches one of upper, lower, right, and left edges of the four-direction input key 230 of the touchpad 210, the controller 120 may the first mode into the second mode. In detail, when the user touches a right input key, the controller 120 may move a notepad of the display apparatus 100, corresponding to the touchpad 210, in a right direction.

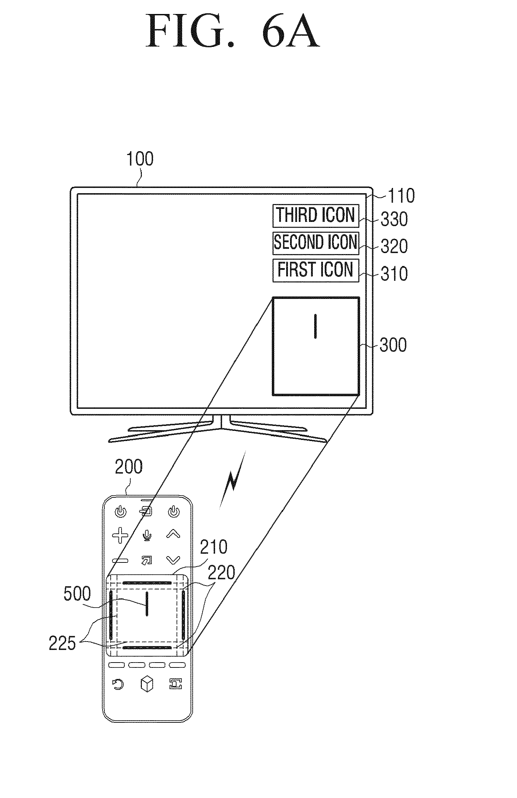

An operation of converting the first mode into the second mode by the display apparatus 100 will be described with reference to FIGS. 6A to 8.

In response to a user touch input being input to a predetermined region of the touchpad 210, the controller 120 may operate in the first mode for displaying an image corresponding to a user touchpad on a note region. For example, as illustrated in FIG. 6A, in a response to a user touch input in the predetermined region (the internal region of the dotted line 220) of the touchpad 210, the controller 120 may execute a first mode operation for displaying an image corresponding to a user touch input trajectory 500 on the note region 300.

According to an exemplary embodiment, in response to a user touch input being input to deviate from a predetermined region of the touchpad 210, the controller 120 may display a highlight on one of at least one icon corresponding to a user touch trajectory and execute a second mode operation for manipulation of at least one icon.

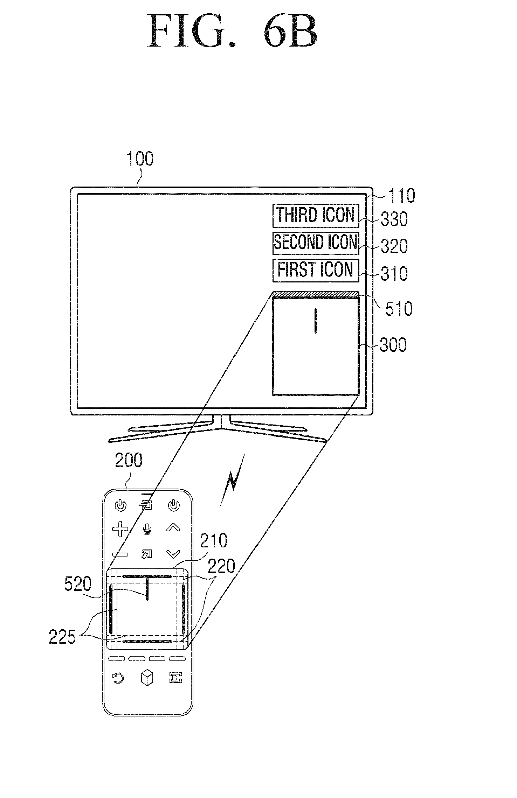

In response to a user touch input being input between a first distance and a second distance greater than the first distance from an edge of the touchpad 210, the controller 120 may control the display 110 to display visual feedback for guidance of conversion to a second mode from a first mode on a surrounding region of the note region. For example, as illustrated in FIG. 6B, when a user touch input is input between a first distance 220 and a second distance 225, the controller 120 may display visual feedback 510 for guidance of conversion to a second mode from a first mode on a surrounding region of the note region 300. In this case, the visual feedback 510 may be displayed outside an edge corresponding to a direction of a user touch input trajectory 520 among upper, lower, right, and left edges. For example, as illustrated in FIG. 6B, the controller 120 may control the display 110 to display the visual feedback 510 on an upper region corresponding to an upper direction as the direction of the user touch input trajectory 520.

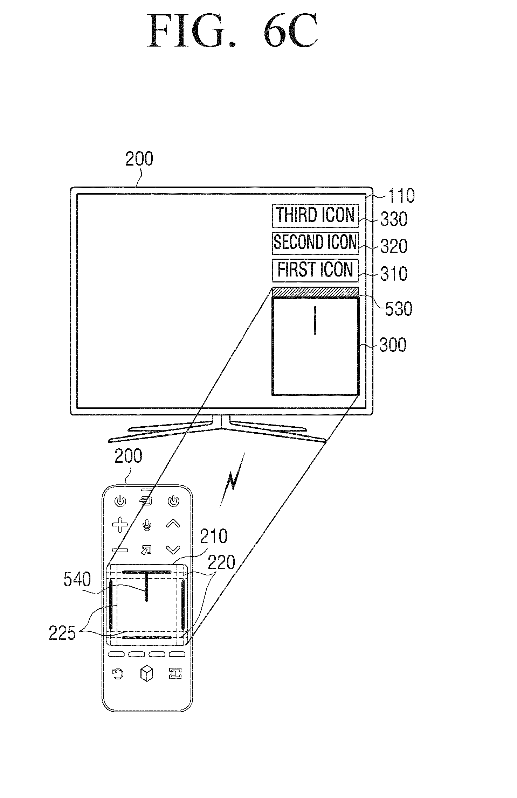

In addition, when a trajectory corresponding to a user touch input is close to the first distance from the second distance, the controller 120 may increase the size of the visual feedback. For example, as illustrated in FIGS. 6B and 6C, in response to a user touch input being input to close to the first distance 220 from the second distance 225, the controller 120 may control the display 110 to increase (to 530 from 510) the size of visual feedback 530 and to display the visual feedback 530. In this case, a ratio in which visual feedback is increased may correspond to a ratio in which a user touch input trajectory is increased to the first distance 220 from the second distance 225.

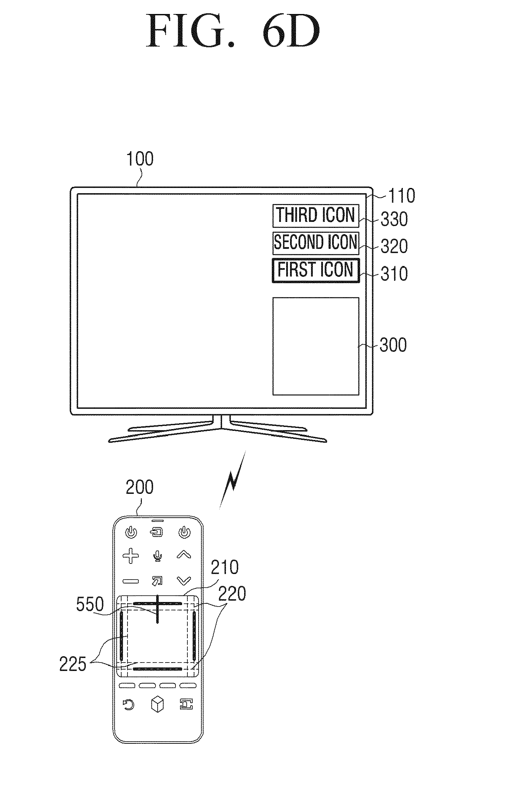

According to an exemplary embodiment, in response to a user touch input being input to deviate from the predetermined region (an internal region of the dotted line 220) of the touchpad, the controller 120 may control the display apparatus 100 to move a highlight to one of at least one icon to operate in the second mode for manipulation of at least one icon. For example, as illustrated in FIG. 6D, in response to a user touch input 550 being input to deviate from the predetermined region (the internal region of the dotted line 220) of the touchpad, the controller 120 may control the display apparatus 100 to move a highlight to the first icon 310 among the first icon 310 to the third icon 330 to operate in the second mode for manipulation of the first icon 310.

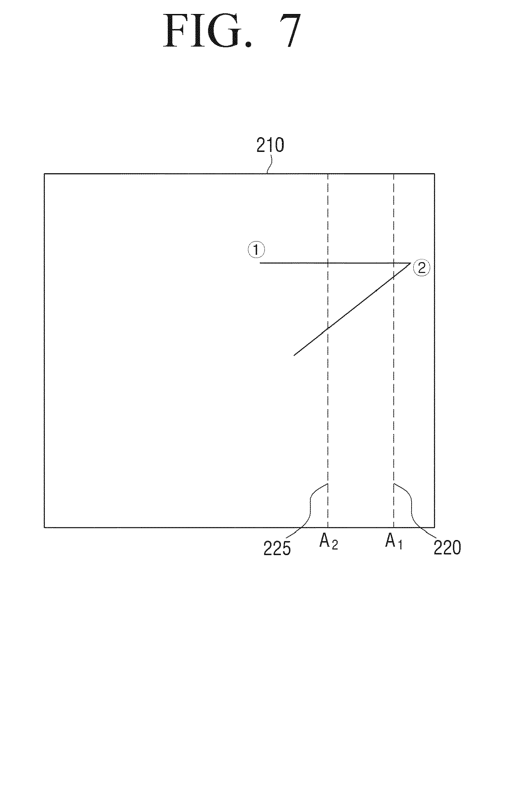

According to an exemplary embodiment, when a user touch input deviates from a predetermined region of the touchpad and then continuously and seamlessly enters the predetermined region of the touchpad, the controller 120 may maintain the first mode. For example, as illustrated in FIG. 7, when a user touch input trajectory ① deviates from A1 220 of the touchpad 210 and continuously and seamlessly enters ② the predetermined region (the internal region of the dotted line 220) of the touchpad 210, the controller 120 may maintain the first mode.

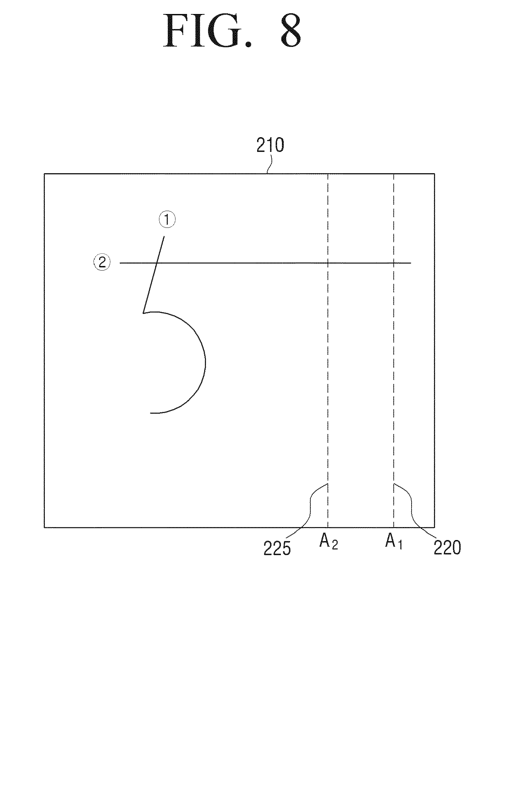

According to an exemplary embodiment, when a user touch input is input in the predetermined region of the touchpad, continuously deviates from the predetermined region, and then is terminated within predetermined threshold time, the controller 120 may maintain the first mode. For example, as illustrated in FIG. 8, when a user touch input trajectory ① is input in the predetermined region (the internal region of the dotted line 220) of the touchpad 210, deviates from the predetermined region (the internal region of the dotted line 220) of the touchpad 210, and then is terminated ② within predetermined, the controller 120 may maintain the first mode. In this case, the predetermined threshold time may be one second. The predetermined threshold time is not limited to the aforementioned specific embodiment and may be modified in various ways.

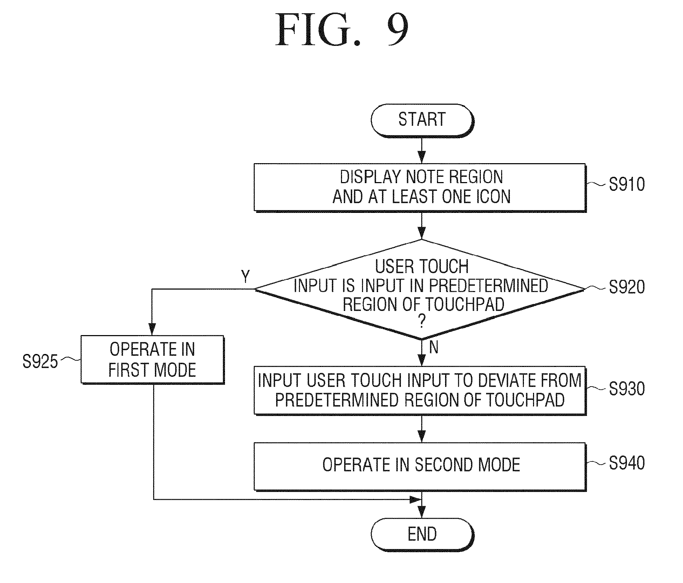

FIG. 9 is a flowchart for explanation of an operation of a display apparatus that interworks with a control apparatus including a touchpad according to an exemplary embodiment.

Referring to FIG. 9, the display apparatus 100 that interworks with the control apparatus including the touchpad displays a note region and at least one icon (S910).

The display apparatus 100 determines whether a user touch input is input in a predetermined region of the touchpad (S920).

When the user touch input is input in the predetermined region of the touchpad (S920-Y), the display apparatus 100 operates in a first mode for displaying an image corresponding to a user touch input trajectory on a note region (S925). For example, as illustrated in FIG. 3, in a response to a text 'A' being input via the touchpad 210, the display apparatus 100 may display the text 'A' corresponding to the user touch input trajectory on the note region 300.

When a user touch input is not input in the predetermined region of the touchpad (S920-N), the display apparatus 100 determines whether a user touch input is input to deviate from the predetermined region of the touchpad (S930).

In response to a user touch input being input to deviate from the predetermined region of the touchpad, the display apparatus 100 operates in the second mode (S940). For example, as illustrated in FIG. 6D, in response to the user touch input 550 deviating from the predetermined region (the internal region of the dotted line 220) of the touchpad 210, the display apparatus 100 may display a highlight on the first icon 310 among the first icon 310 to the third icon 330 and operates in the second mode for manipulation of the first icon 310.

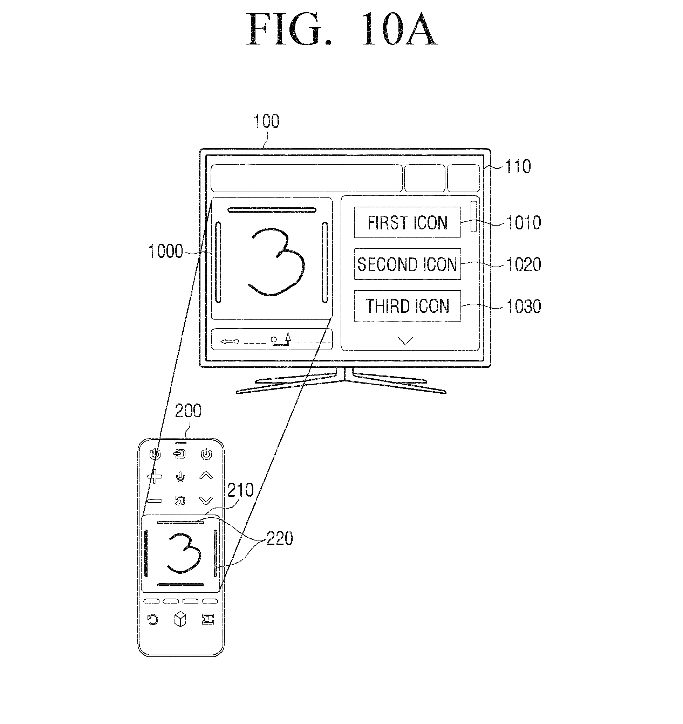

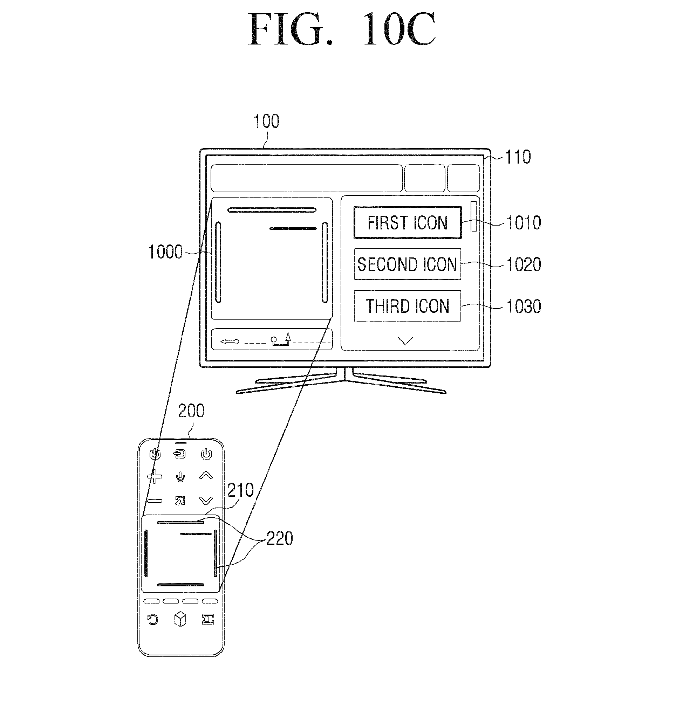

The note region described with referenced to FIGS. 6A to 8 is merely an embodiment of the present and thus other different forms of note regions are also contained in the technical spirit of the exemplary embodiment. FIGS. 10A to 10C are diagrams for explanation of an operation of a display apparatus for displaying a different from of note pad from the note pad described with reference to FIGS. 6A to 8.

In response to a user touch input being input in a predetermined region of the touchpad 210, the controller 120 may operate in a first mode for displaying an image corresponding to a user touchpad in a note region. For example, as illustrated in FIG. 10A, in response to a user touch input being input in the predetermined region (the internal region of the dotted line 220) of the touchpad 210, the controller 120 may execute a first mode operation for displaying an image '3' corresponding to a user touch input trajectory (a number'3') input to the touchpad 210, on a note region 1000.

In addition, in response to a user touch input being input to deviate from the predetermined region of the touchpad 210, the controller 120 may display a highlight on one of at least one icon corresponding to a user touch trajectory and execute a second mode operation for manipulation of at least one icon.

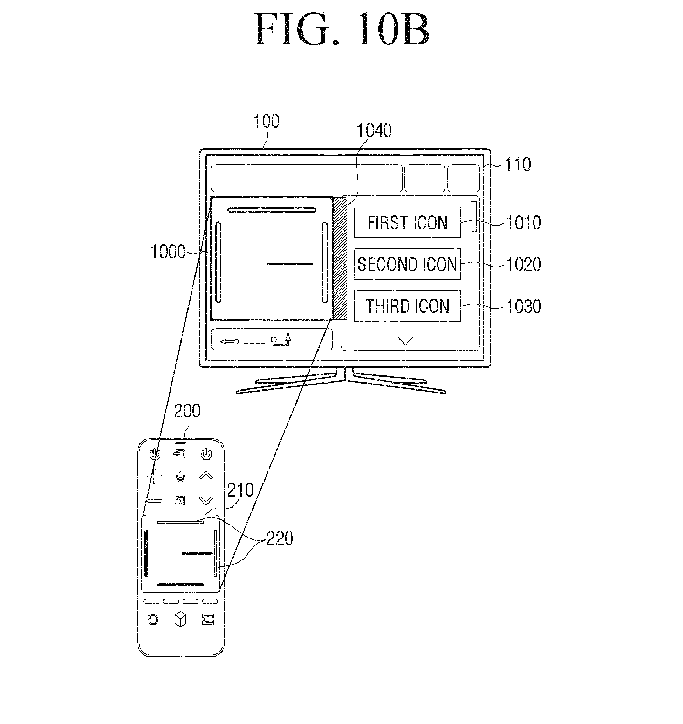

In response to a user touch input being input between a first distance and a second distance greater than the first distance from an edge of the touchpad 210, the controller 120 may display visual feedback for guidance of conversion to a second mode from a first mode on a surrounding region of the note region. For example, as illustrated in FIG. 10B, when a user touch is input between the first distance 220 and a second distance (not shown), the controller 120 may display visual feedback 1040 for guidance of conversion to the second mode from the first mode on a surrounding region of the note region 1000. In this case, the visual feedback 1040 may be displayed outside an edge corresponding to a direction of the user touch input trajectory 520 among upper, lower, right, and left edges of the note region 1000.

In addition, in response to a user touch input being input to deviate from the predetermined region (the internal region of the dotted line 220) of the touchpad 210, the controller 120 may control the display apparatus 100 to display a highlight on one of at least one icon and to operate in a second mode to manipulation of at least one icon. For example, as illustrated in FIG. loC, in response to a user touch input being input to deviate from the predetermined region (the internal region of the dotted line 220) of the touchpad 210, the controller 120 may control the display apparatus 100 to move a highlight to a first icon 1010 corresponding to a user touch input trajectory among the first icon 1010 to the third icon 1030 and to operate in the second mode for manipulation of the highlighted first icon 1010.

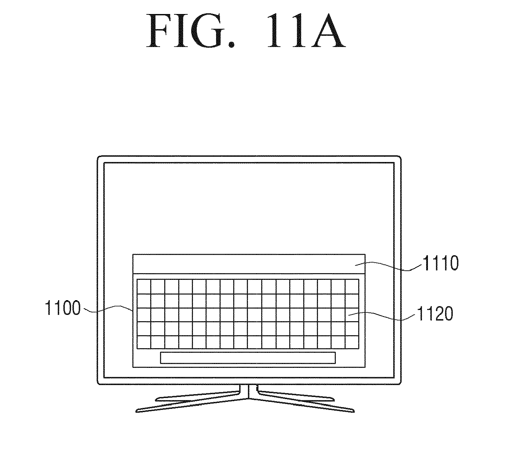

Hereinafter, a method of displaying a text input by a control apparatus will be described with regard to other embodiments of the present invention with reference to FIGS. 11A to 13.

First, as illustrated in FIG. 11A, the controller 120 may control the display 110 to display a keyboard type text input user interface (UI) 1100. In this case, the text input UI 1100 may include a character input window 1110 and a keyboard UI 1120.

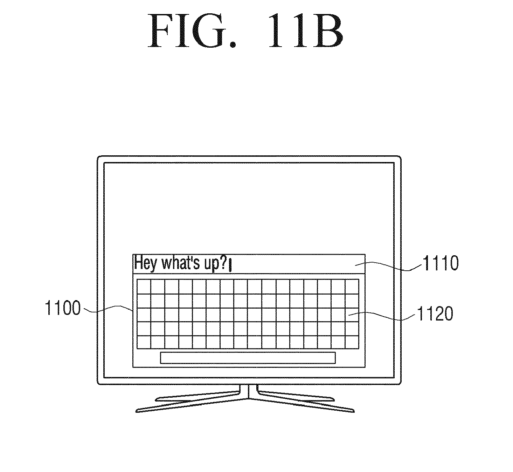

In addition, in response to a text input command being received through the text input UI 1100, the controller 120 may control the display 110 to display a text input to the character input window 1110 of the text input UI 1100. For example, in response to a text "Hey what's up?" being input through the keyboard UI 1120, the controller 120 may control the display 110 to display "Hey what's up?" on the character input window 1110 of the text input UI 1100, as illustrated in FIG. 11B.

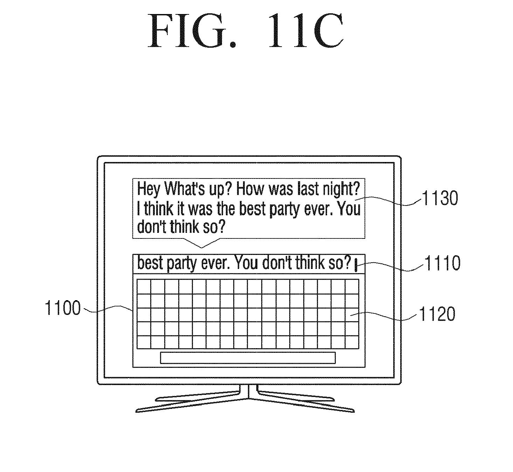

In addition, during reception of a text input command through the text input UI 1100, when a text is displayed on the character input window 1110 and then all texts input to the character input window 1110 may not be displayed, the controller 120 may control the display 110 to display a separate text display window. For example, when all the input texts "Hey what's up? How was last night? I think it was the best party ever. You don't think so?" may not be displayed on the character input window 1110, the controller 120 may control the display 110 to display a separate text display window 1130, as illustrated in FIG. 11C.

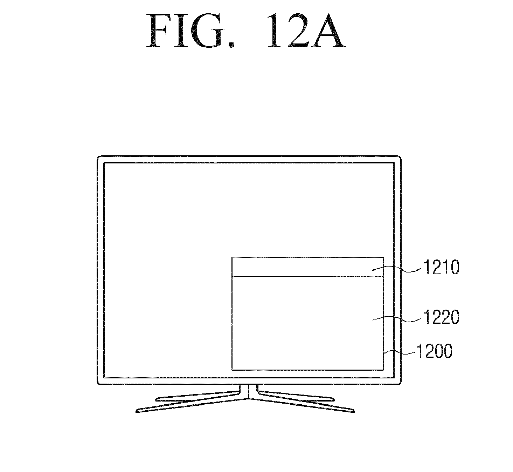

According to another embodiment, as illustrated in FIG. 12A, the controller 120 may control the display 110 to display a note region 1200. In this case, the note region 1200 may include a character input window 1210 and a note pad 1220.

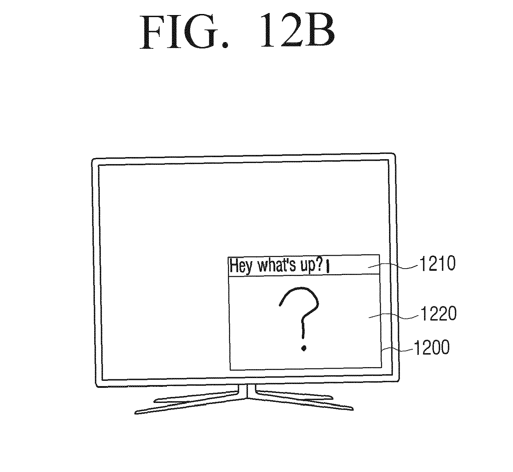

In addition, in response to a user touch input being received from the control apparatus 200 the controller 120 may control the display 110 to display the input user touch input on the note pad 1220, to recognize the user touch input as characters, and to display the characters on a character input window. For example, when a user continuously inputs the text "Hey what's up?" to a touchpad of the control apparatus 200, the controller 120 may control the display 110 to display the input text on the note pad 1220, to recognize the text input to the note pad, and to display "Hey what's up?" on the character input window 1210, as illustrated in FIG. 12B.

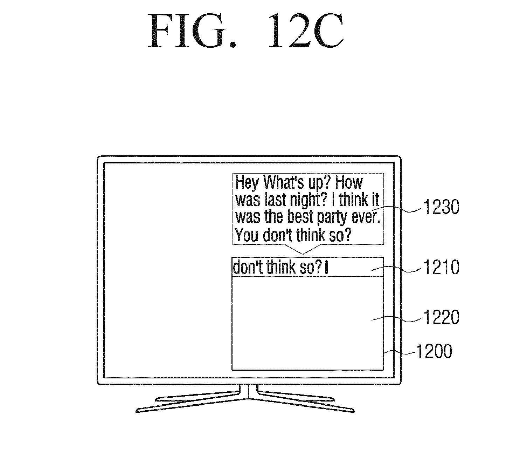

In addition, during reception of a user touch input from the control apparatus 200, when a text is displayed on the character input window 1210 and then all texts input to the character input window 1210 may not be displayed, the controller 120 may control the display 110 to display a separate text display window. For example, when all the input texts "Hey what's up? How was last night? I think it was the best party ever. You don't think so?" may not be displayed on the character input window 1110, the controller 120 may control the display 110 to display a separate text display window 1230, as illustrated in FIG. 12C.

As described above, when all the character input windows 1110 and 1210 may not be displayed, the separate text display windows 1130 and 1230 may be displayed such that a user may continuously check texts input by the user.

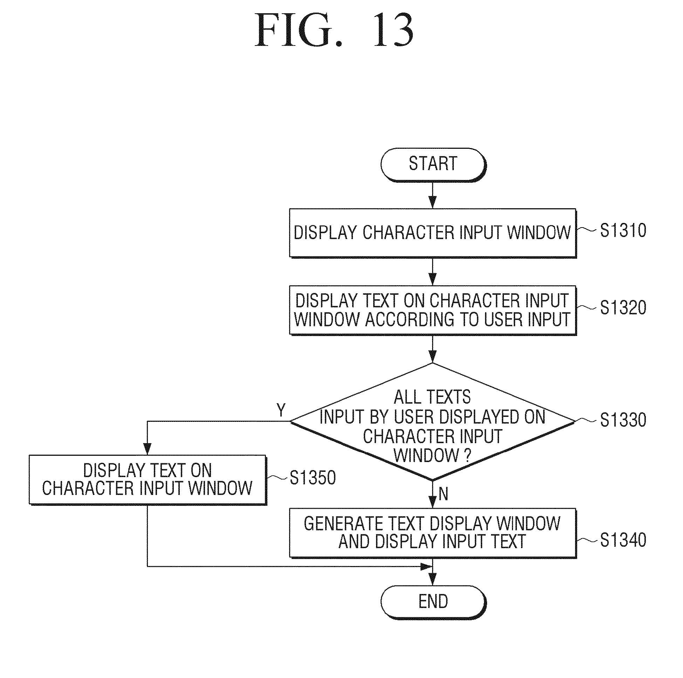

FIG. 13 is a flowchart of a method of displaying a text of a display apparatus according to an embodiment.

First, the display apparatus 100 displays a character input window (S1310). In this case, the display apparatus 100 may display a character input window as illustrated in FIGS. 11A and 12A.

The display apparatus 100 displays the text input to the character input window according to a user input (S1320).

In addition, the display apparatus 100 determines whether all texts input by the user are displayed on a character input window (S1330).

When all the input texts are displayed on the character input window (S1330-Y), the display apparatus 100 displays the text input to the character input window (1340).

However, when all the input texts are not displayed on the character input window (S1330-N), the display apparatus 100 generates a separate text display window and displays the input text on the text display window (S1350).

A non-transitory computer readable medium may store thereon a program for performing the method of controlling a display apparatus according to the exemplary embodiments. The non-transitory computer readable medium is a medium that semi-permanently stores data and from which data is readable by a device, but not a medium that stores data for a short time, such as register, a cache, a memory, and the like. In detail, the aforementioned various applications or programs may be stored in the non-transitory computer readable medium, for example, a compact disc (CD), a digital versatile disc (DVD), a hard disc, a bluray disc, a universal serial bus (USB), a memory card, a read only memory (ROM), and the like, and may be provided.

The foregoing exemplary embodiments and advantages are merely exemplary and are not to be construed as limiting the present invention as defined by the claims. The present teaching can be readily applied to other types of apparatuses. Also, the description of the exemplary embodiments is intended to be illustrative, and not to limit the scope of the claims, and many alternatives, modifications, and variations will be apparent to those skilled in the art while still falling within the scope of the invention as defined by the claims.

## Claims

1. A method of controlling a display apparatus interworking with a control apparatus comprising a touchpad, the method comprising:
displaying a note region and at least one icon;
operating in a first mode for displaying an image corresponding to a user touch input on the note region in response to the user touch input in a predetermined region of the touchpad; and
operating in a second mode for displaying a highlight on one of the at least one icon and manipulating the at least one icon in response to a user touch input deviating from the predetermined region of the touchpad.

2. The method as claimed in claim 1, wherein the predetermined region is spaced away from an edge of the touchpad by as much as a first distance or more.

3. The method as claimed in claim 2, further comprising displaying visual feedback for guidance of conversion to a second mode from a first mode on a surrounding region of the note region in response to the user touch input between the first distance and a second distance greater than the first distance from the edge of the touchpad.

4. The method as claimed in claim 3, wherein the visual feedback is displayed outside an edge corresponding to a direction in which the user touch is input, among upper, lower, right, and left edges of the note region.

5. The method as claimed in claim 3 or 4, wherein the displaying of the visual feedback comprises increasing a size of the visual feedback in response to a user touch input close to the first distance from the second distance.

6. The method as claimed in any one of claims 1 to 5, wherein the operating in the first mode comprises maintaining the first mode when the user touch input deviates from the predetermined region of the touchpad and then continuously and seamlessly enters the predetermined region of the touchpad.

7. The method as claimed in any one of claims 1 to 6, wherein the operating in the first mode comprises maintaining the first mode when the user touch input is input in the predetermined region of the touchpad, continuously deviates from the predetermined region, and then is terminated within a predetermined threshold time.

8. A display apparatus for interworking with a control apparatus comprising a touchpad, the display apparatus comprising:
a display configured to display a note region and at least one icon; and
a controller configured to operate in a first mode for displaying an image corresponding to a user touch input on the note region in response to the user touch input in a predetermined region of the touchpad and to operate in a second mode for displaying a highlight on one of the at least one icon and manipulating the at least one icon in response to a user touch input to deviate from the predetermined region of the touchpad.

9. The display apparatus as claimed in claim 8, wherein the predetermined region is spaced away from an edge of the touchpad by as much as a first distance or more.

10. The display apparatus as claimed in claim 9, wherein the controller displays a visual feedback for guidance of conversion to a second mode from a first mode on a surrounding region of the note region in response to the user touch input between the first distance and a second distance greater than the first distance from an edge of the touchpad.

11. The display apparatus as claimed in claim 10, wherein the visual feedback is displayed outside an edge corresponding to a direction in which the user touch input, among upper, lower, right, and left edges of the note region.

12. The display apparatus as claimed in claim 10 or 11, wherein the visual feedback is increased in size in response to the user touch input close to the first distance from the second distance.

13. The display apparatus as claimed in any one of claims 8 to 12, wherein the controller maintains the first mode when the user touch input deviates from the predetermined region of the touchpad and then continuously and seamlessly enters the predetermined region of the touchpad.

14. The display apparatus as claimed in any one of claims 8 to 13, wherein the controller maintains the first mode when the user touch input is input in the predetermined region of the touchpad, continuously deviates from the predetermined region, and then is terminated within predetermined threshold time.
